# EUROPEAN PATENT SPECIFICATION

(11) **EP 2 213 357 B1**
(45) Date of publication and mention of the grant of the patent: **19.09.2012**
(21) Application number: 09250029.7
(22) Date of filing: 07.01.2009
(51) Int. Cl.: B01D 45/06, B01D 45/08

(54) **Mechanical separation system**
Mechanisches Trennsystem
Système de séparation mécanique

(43) Date of publication of application: 04.08.2010
(73) Proprietor: INGERSOLL-RAND COMPANY, Montvale, NJ 07645 (US)
(72) Inventor: Palotta, Alessandro, 40033 Casalecchio di Reno (BO) (IT)
(74) Representative: Every, David Aidan

(56) References cited:
- DE-A1- 3 910 559
- DE-A1- 19 623 178
- US-A- 3 075 336
- US-A- 3 747 347
- US-A- 4 515 137

## Description

### BACKGROUND

The present invention relates to a separator for separating a flow of fluid, and more particularly it relates to a mechanical air-oil separator.

Separation systems are often employed in air compressor systems to separate lubricating oil from the flow of compressed air. Many different separators exist including mechanical separators and coalescing filters.

US 3,075,336 discloses a separator for removing oil and water from a compressed air system in which a housing has internal integral partition members, one of which is inclined. The partition members serve to change the direction of flow of the air-oil mixture by 180° so as to improve separation.

### SUMMARY

According to the present invention there is provided a separator (16; 138) for separating a mixed flow of fluid into fluid components, the separators comprising a housing (18; 148) substantially enclosing an interior space (34; 162) and defining an inlet aperture (26; 154) and an outlet aperture (30; 158) a wall (50; 190) disposed within the interior space and cooperating with the housing to define a first chamber (54; 194) that receives the flow of fluid from the inlet, a second chamber (58; 198) that receives the flow of fluid from the first chamber, a third chamber (62; 202) that receives the flow of fluid from the second chamber, and a fourth chamber (66; 206) that receives the flow of fluid from the third chamber and directs the flow of fluid to the outlet aperture, characterized in that there is provided a first deflector (70; 214) positioned adjacent the inlet aperture and within the first chamber, the first deflector configured to deflect the flow of fluid entering through the inlet aperture at an angle of at least 90 degrees so as to separate the flow of fluid, and a second deflector (74; 238) positioned adjacent the outlet aperture and within the fourth chamber and arranged to redirect the flow of fluid through a first angle of at least 90 degrees and a second angle of at least 90 degrees so as to effect a change in velocity of the flow and further separation of the flow of fluid, the wall (50; 190) at least partially defining a first aperture (78; 222) positioned to allow flow between the first chamber and the second chamber, a second aperture (82; 226) positioned to allow flow between the second chamber and the third chamber, and a third aperture (86; 230) positioned to allow flow between the third chamber and the fourth chamber, the chambers and apertures arranged to effect changes in velocity of the flow and yet further separation of the flow of fluid.

Other aspects of the invention will become apparent by consideration of the detailed description and accompanying drawings.

### BRIEF DESCRIPTION OF THE DRAWINGS

Fig. 1 is a perspective view of a compressor system that includes a separator tank, a compressor, and an external separator filter.

Fig. 2 is a perspective view of the separator tank of Fig. 1.

Fig. 3 is a perspective view of the separator tank of Fig. 2, with a portion removed to illustrate an interior space.

Fig. 4 is a section view of the separator tank of Fig. 2, taken along line 4-4 of Fig. 2.

Fig. 5 is a perspective view of the separator tank of Fig. 2, with a portion removed to illustrate an interior space.

Fig. 6 is a section view of the separator tank of Fig. 2, taken along line 6-6 of Fig. 2.

Fig. 7 is a perspective view of a second construction of a compressor system that includes a separator tank, a compressor, and an external separator filter.

Fig. 8 is a perspective view of the separator tank of Fig. 7.

Fig. 9 is a perspective view of the separator tank of Fig. 8, with a portion removed to illustrate an interior space.

Fig. 10 is a section view of the separator tank of Fig. 8, taken along line 10-10 of Fig. 8.

Fig. 11 is a perspective view of the separator tank of Fig. 8, with a portion removed to illustrate an interior space.

Fig. 12 is a section view of the separator tank of Fig. 8, taken along line 12-12 of Fig. 8.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

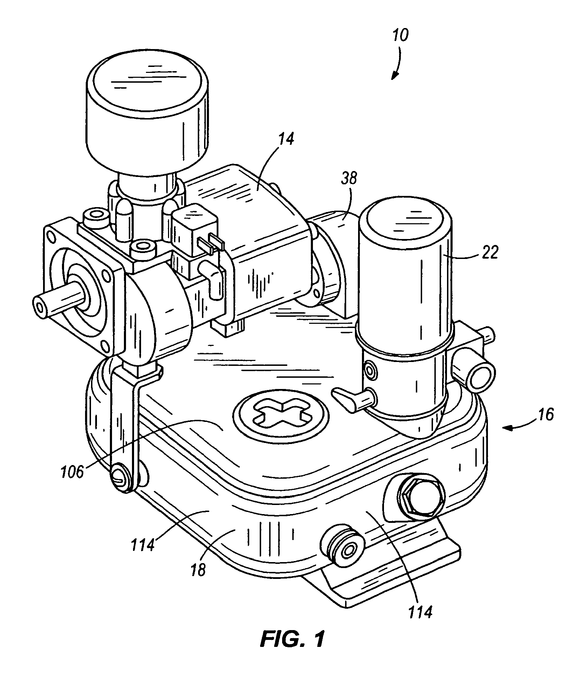

Fig. 1 illustrates a compressor system 10 that includes a compressor or screw end 14, a separator tank 16 including a housing 18, and an external filter 22. The external filter 22 is preferably a coalescing filter that is operable to remove oil from an air-oil mixture. The external filter 22 is positioned to receive a flow of the air-oil mixture from the housing 18 and to discharge a substantially oil free air stream for use. The separated oil is directed to the compressor 14 for reuse or is directed to an oil filter, oil cooler, or other equipment before reuse in the compressor 14.

The compressor 14 includes an oil-flooded rotary screw compressor. While not illustrated, the compressor 14 is coupled to a motor or an engine that drives the compressor 14. During operation, the compressor 14 draws in a working fluid such as air, compresses the working fluid, and discharges the working fluid as a flow of compressed fluid or compressed air. Oil is injected into the compressor 14 to lubricate and cool the moving parts of the compressor 14 and to provide a seal between the rotating screws of the compressor 14. A portion of this oil becomes mixed or entrained in the compressed fluid stream and is discharged from the compressor 14 with the compressed fluid.

It should be noted that while the invention is described in use with an oil flooded rotary screw air compressor 14, other types of oil flooded compressors (e.g., gear, vane, gerotor, etc.) that compress other working fluids (e.g., nitrogen, refrigerant, ammonia, etc.) could also be used with the invention.

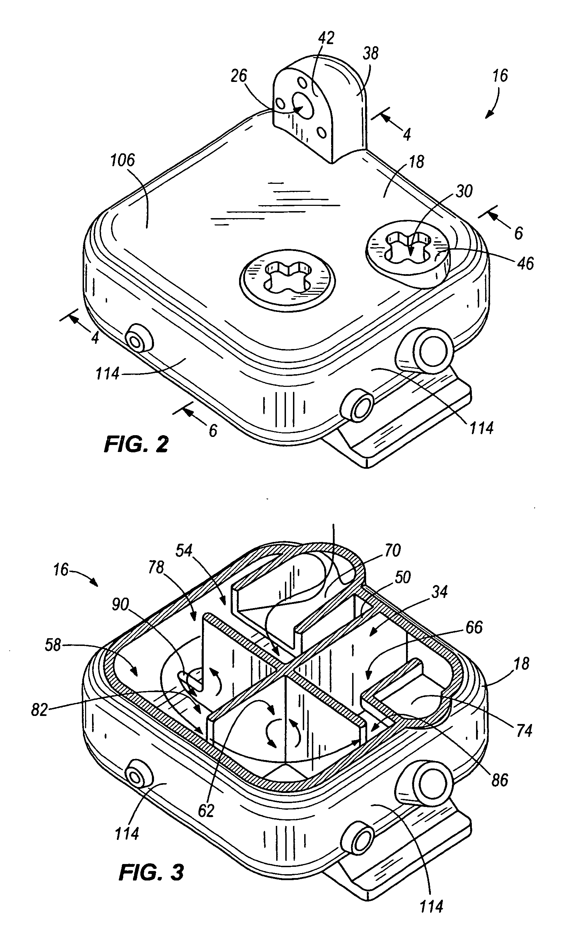

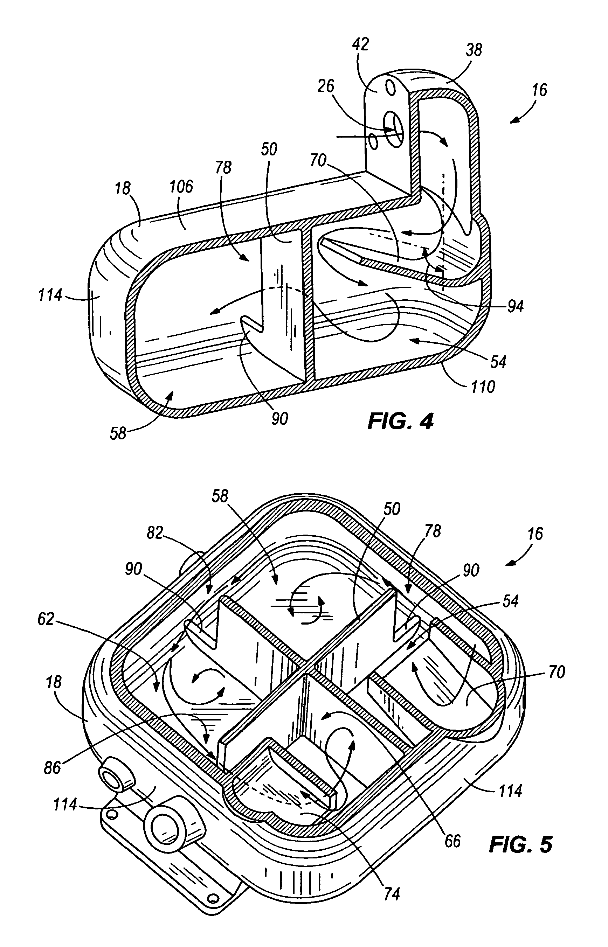

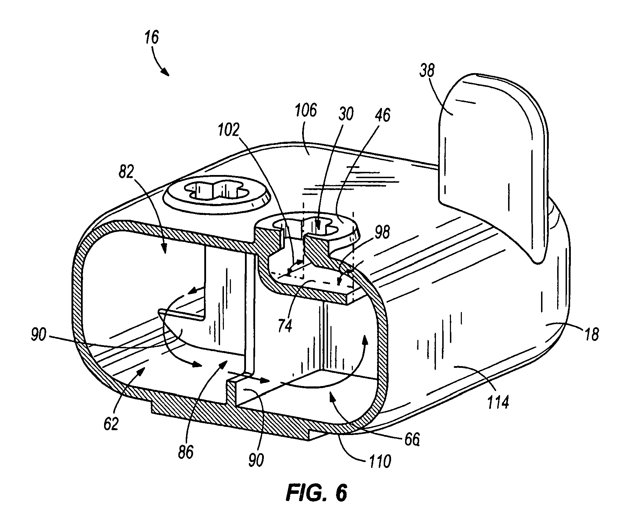

Fig. 2 illustrates the separator tank 16 of Fig. 1. The separator tank 16 includes the housing 18 that defines an inlet aperture 26, an outlet aperture 30, and an interior space 34 (shown in Fig. 3). The housing 18 includes a top surface 106, a bottom surface 110 (shown in Figs. 4 and 6), and one or more walls 114 that cooperate to enclose the interior space 34. In the illustrated construction, the housing 18 is cuboid-shaped with rounded or filleted edges. Of course, other shapes or arrangements could be employed if desired.

The inlet aperture 26 is formed in a projection 38 that extends above the top surface 106 of the housing 18. The projection 38 includes an engagement surface 42 arranged to connect to the compressor 14 such that fluid discharged from the compressor 14 is directed into the housing 18 via the inlet aperture 26. In other constructions, the inlet aperture 26 may be formed in other locations on the housing 18.

The outlet aperture 30 is formed in the top surface 106 of the housing 18. The housing 18 defines an attachment surface 46 around the outlet 30 that is arranged to engage and support the external filter 22. Thus, fluid discharged from the housing 18 exits via the outlet aperture 30 and flows directly into the external filter 22. In other embodiments, the outlet aperture 30 may be formed in other locations.

As illustrated in Fig. 3, a wall 50 is positioned within the housing 18 to divide the interior space 34 into a plurality of chambers. In the illustrated construction, the wall 50 is X-shaped and extends substantially from the top surface 106 to the bottom surface 110 of the housing 18 to define a first or inlet chamber 54, a second chamber 58, a third chamber 62, and a fourth or outlet chamber 66. The wall 50 may be formed of multiple wall portions that intersect approximately perpendicularly to form four, approximately equal chambers 54, 58, 62, 66. In other constructions, the wall portions may intersect in a non-perpendicular arrangement to form four unequal chambers. In yet other constructions, the wall 50 may be formed of a greater number of wall portions that intersect to form more than four chambers. In preferred constructions, the wall 50 is formed as a single component with the housing 18. However, other constructions may employ a separate wall permanently attached (e.g., welded) to the housing 18 or removably attached to the housing 18.

The first chamber 54 includes a first deflector 70 positioned adjacent the inlet aperture 26, as illustrated in Figs. 3 and 4. The first deflector 70 is positioned to turn the flow of the air-oil mixture through an angle 94 of at least 90 degrees. In the illustrated construction, the first deflector 70 turns the flow of the air-oil mixture through an angle 94 of approximately 110-120 degrees, with other angles 94 also being possible. The first deflector 70 is formed as one piece with the housing 18. However, other constructions may employ a separately formed first deflector 70 that is permanently attached (e.g., welded) or removably attached to the housing 18.

The wall 50 and housing 18 cooperate to define a first aperture 78 that provides fluid communication between the first chamber 54 and the second chamber 58. With reference to Fig. 4, the first aperture 78 is rectangularly shaped and arranged such that it does not extend to the bottom surface 110 of the housing 18. Thus, the first aperture 78 has a height that is less than the height of the wall 50. A flange 90 of the wall 50 is defined below the first aperture 78. This arrangement allows separated oil to collect in the first chamber 54 until it reaches the lowermost edge of the first aperture 78, which is the uppermost edge of the flange 90. Once at this height, oil will flow through the first aperture 78 into the second chamber 58. This process slows the flow of separated oil through the housing 18 and allows for additional time for the oil to deairate and settle. In other constructions, the first aperture 78 may be defined by the wall 50 alone (e.g., a hole through the wall 50), the first aperture 78 may have different shapes (e.g., circular), or multiple openings may cooperate to define the first aperture 78.

The size of the first aperture 78 is chosen such that a desired acceleration of the air-oil mixture is produced. The reduced flow area of the first aperture 78, when compared to the first chamber 54, produces a flow acceleration as the air-oil mixture passes therethrough. The flow then enters the second chamber 58 and slows as a result of the larger flow area. The changes in velocity aid in separating the oil from the air. However, an aperture that is too large may not produce a sufficient change in velocity, and an aperture that is too small may produce too much acceleration, thereby producing unwanted turbulence which may re-mix separated oil, and cause excessive noise. Furthermore, because changes in velocity cause unwanted pressure drops, the sizing of the aperture 78 balances the degree of separation and the resulting pressure drop.

The second chamber 58 is a substantially empty space positioned adjacent the first chamber 54. The second chamber 58 does not include any deflectors, barriers, or other obstructions, as illustrated with reference to Figs. 3 and 5. In other constructions, the second chamber 58 may contain a deflector, baffle, or other structure operable to turn or deflect the flow of the air-oil mixture as it passes therethrough. For example, one construction could include a baffle positioned on the housing to force the flow into the interior of the chamber, rather than allowing the flow to remain close to the housing wall 114.

The wall 50 and housing 18 cooperate to define a second aperture 82, similar to the first aperture 78, that provides fluid communication between the second chamber 58 and the third chamber 62. The second aperture 82 is arranged such that it does not extend to the bottom surface 110 of the housing 18, allowing the separated oil to collect in the second chamber 58 until it reaches the lowermost edge of the second aperture 82, thereby slowing the flow of oil through the housing. In other constructions, the second aperture 82 may be positioned such that it is closer to or further from the bottom surface 110 than the first aperture 78. Alternatively, the second aperture 82 may be in communication with the bottom surface 110. Of course, the second aperture 82 may be formed by the wall 50 alone, or may be sized, shaped or positioned differently than the first aperture 78.

The third chamber 62 is similar to the second chamber 58 and is a substantially empty space positioned diagonally from the first chamber 54. The third chamber 62 does not include any deflectors, barriers, or other obstructions, as illustrated with reference to Figs. 5 and 6. In other constructions, the third chamber 62 may be different than the second chamber 58 and may contain a deflector, baffle, flow dam, or other structure operable to turn or deflect the flow of the air-oil mixture as it passes therethrough.

The wall 50 and housing 18 cooperate to define a third aperture 86, similar to the first and second apertures 78, 82, that provides fluid communication between the third chamber 62 and the fourth chamber 66. The third aperture 86 is arranged such that it does not extend to the bottom surface 110 of the housing 18 and therefore slows the flow of separated oil through the housing 18, in the same way as the first and second apertures 78, 82. In other constructions, the third aperture 86 may be formed by the wall 50 alone, or may be sized, shaped, or positioned differently than the first and second apertures 78, 82.

The fourth chamber 66 is a space positioned adjacent the first chamber 54 and third chamber 62. The fourth chamber 66 includes the second deflector 74, positioned adjacent the outlet aperture 30. In other constructions, the fourth chamber 66 may contain additional baffles, deflectors, or other structures operable to turn or deflect the flow of fluid as it passes therethrough.

The second deflector 74 is positioned adjacent the outlet aperture 30 to force the flow of fluid through a first angle 98 of at least 45 degrees and a second angle 102 of at least 45 degrees. In preferred constructions, the second deflector 74 is arranged to turn the flow of fluid through a first angle 98 of about 90 degrees and a second angle 102 of about 90 degrees. In the illustrated construction, the second deflector 74 is formed integrally as one piece with the housing. In other constructions, the second deflector may be permanently attached (e.g., welded) or removably coupled to the housing 18.

In operation, the compressor 14 discharges a stream of compressed fluid containing oil (e.g., an air-oil mixture). The inlet aperture 26 is positioned to receive the flow of the air-oil mixture, which turns and travels downward through the projection 38 into the first chamber 54 (as best shown in Fig. 4). The first deflector 70 turns the flow of the air-oil mixture through an angle of about 110-120 degrees. Because oil particles are heavier than the air and thus carry more inertia, they tend to flow toward the outside of any turn made by the flow. Therefore, some of the oil particles collide with and stick to the first deflector 70. These particles separate from the air-oil mixture, and travel to the bottom of the housing 18 due to gravity. Some of the oil particles in the air-oil mixture strike the top 106 or wall 50 of the housing 18 and also separate from the air-oil mixture. The separated oil particles drain down the wall 50 or housing 18 to the bottom of the housing 18. The air-oil mixture, containing a decreased oil content, then flows through the first aperture 78 to the second chamber 58.

The flow of the air-oil mixture changes velocity as it passes through the first aperture 78. In particular, the reduced flow area of the first aperture 78 causes the air-oil mixture to accelerate. The air-oil mixture expands and decelerates as it enters the larger flow area of the second chamber 58. The increase and decrease in the velocity of the air-oil mixture aids in the separation of the oil from the air as the higher inertia of the oil in the air stream causes it to resist changes in velocity and separate from the air.

The air-oil mixture flows through the second aperture 82 into the third chamber 62. Once again, the air-oil mixture accelerates as it passes through the second aperture 82 and decelerates as it passes through the third chamber 62. The second increase and decrease in the velocity of air-oil mixture allows additional oil to separate from the air-oil mixture, as described above.

The air-oil mixture flows through the third aperture 86 into the fourth chamber 66. When the air-oil mixture passes through the third aperture 86, it accelerates, and when the mixture enters the fourth chamber, it decelerates, thereby separating additional oil.

The air-oil mixture exits the fourth chamber 66 through the outlet aperture 30, after passing around the second deflector 74. The second deflector 74 is positioned in the fourth chamber 66 adjacent the outlet aperture 30, near the top of the housing 18. The second deflector 74 turns the flow of the air-oil mixture twice, through two 90 degree angles. Because the velocity and direction of the air-oil mixture is changed twice, additional oil may separate from the air-oil mixture before exiting the housing 18. The air-oil mixture exits into an external filter 22 that filters any remaining oil from the fluid (e.g., compressed air) to ensure adequate separation of oil from the air before the air is used.

As described above, the oil that separates from the air-oil mixture as it flows through the housing 18 drains downward, due to gravity, and collects in the bottom portions of each chamber. The flanges 90 of the wall 50 separate the oil in each chamber until the oil level raises high enough to overflow into the adjacent chambers. This slows the flow of oil between adjacent chambers and provides time for the oil to deairate. Eventually, the collected oil flows to the fourth chamber 66 where it is drained for reuse.

The corners of the housing 18 include large fillets, as opposed to sharp corners, to help decrease oil lapping and foam production in the separated oil in the bottom of the housing 18. The oil may be moved by the flow of the circulating air-oil mixture. For example, the oil may be blown toward the outside of the housing 18. Rather than striking an abrupt surface and falling back upon itself, possibly trapping air in the oil, the oil will rise up along the filleted edge of the housing 18 and slowly slide back down along the filleted edge. This reduces lapping and foaming and aids in maintaining the separation of air from oil. The decreased amount of air trapped in the oil reduces settling time and improves the efficiency of the compressor system 10.

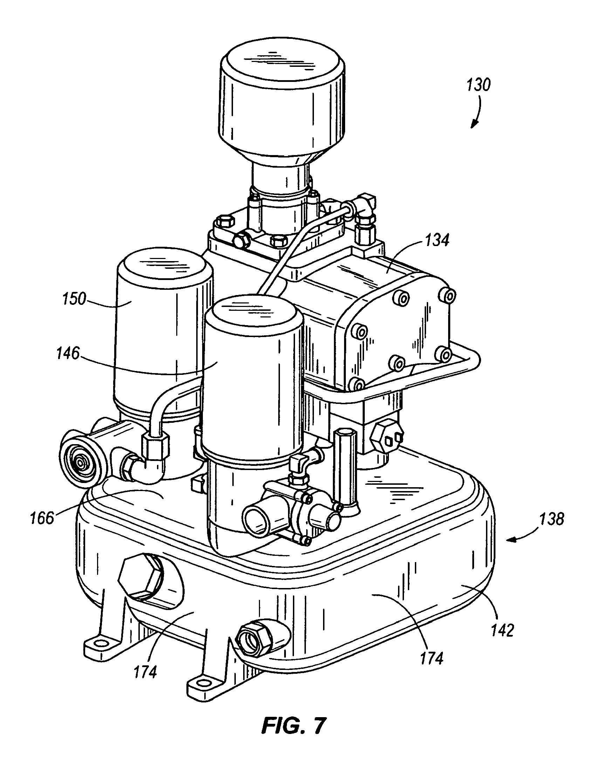

Figs. 7-12 illustrate a second construction of a compressor system 130 that is similar to the compressor system 10 illustrated in Figs. 1-6. The compressor system 130 includes a compressor or screw end 134, a separator tank 138 including a housing 142, and two external filters 146, 150. The external filters 146, 150 are similar to the filter 22 in Fig. 1. One external filter 146 is positioned to receive a flow of the air-oil mixture from the housing 142 and to discharge a substantially oil free air stream for use. The separated oil is directed to the compressor 134 for reuse or is directed to an oil filter, oil cooler, or other equipment before reuse in the compressor 134.

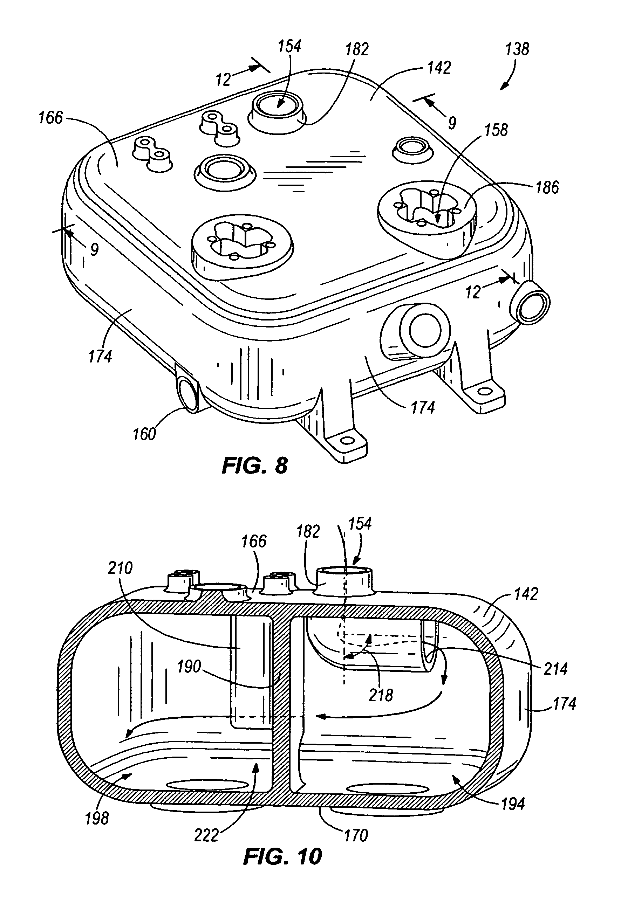

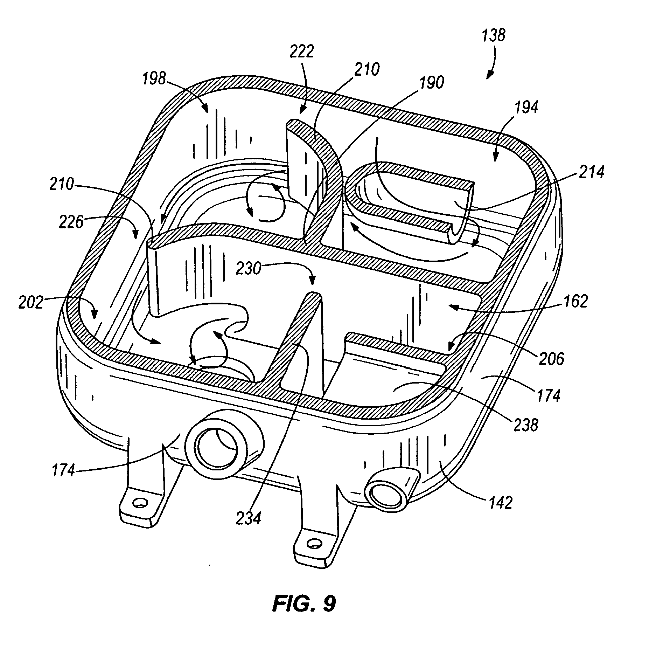

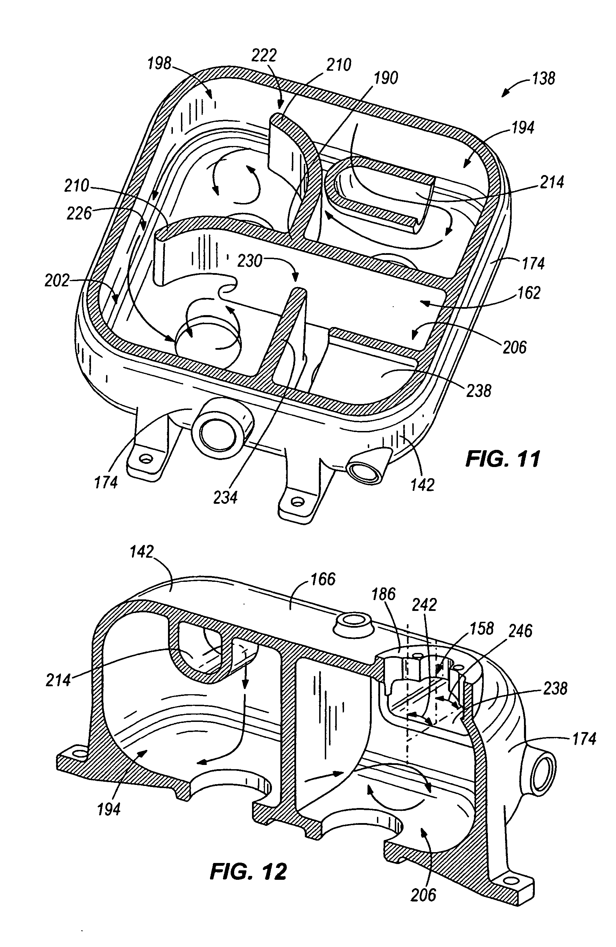

Fig. 8 illustrates the separator tank 138 of Fig. 7. The separator tank 138 includes the housing 142 that defines an inlet aperture 154, an outlet aperture 158, an oil drain 160, and an interior space 162 (shown in Fig. 9). The housing 142 includes a top surface 166, a bottom surface 170 (shown in Figs. 10 and 12), and one or more walls 174 that cooperate to enclose the interior space 162. The separator tank 138 is similar to the separator tank 16 of Figs. 1-6.

The inlet aperture 154 is formed in the housing 142 rather than in a projection extending above the top surface 166 of the housing 142. The housing 142 defines engagement surface 182 arranged to connect to the compressor 134 such that fluid discharged from the compressor 134 is directed vertically into the housing 142 via the inlet aperture 154.

The outlet aperture 158 is similar to the outlet aperture 30 illustrated in Fig. 2 and is formed in the top surface 166 of the housing 142. The housing 142 defines an attachment surface 186 that is arranged to engage and support the external filter 146. Thus, fluid discharged from the housing 142 exits via the outlet aperture 158 and flows directly into the external filter 146.

As illustrated in Fig. 9, a wall 190 (or walls) is positioned within the housing 148 to divide the interior space 162 into a plurality of chambers. The wall 190 extends substantially from the top surface 166 to the bottom surface 170 and cooperates with the housing 142 to divide the interior space 162 into a first chamber 194, a second chamber 198, a third chamber 202, and a fourth chamber 206. In the illustrated construction, the wall 190 contains a curved portion 210 located between the first chamber 194 and the second chamber 198 and a curved portion 210 located between the second chamber 198 and the third chamber 202. The curved portions 210 of the wall do not extend to the bottom surface 170 of the housing 142.

The first chamber 194 includes a first deflector 214 positioned adjacent the inlet aperture 154, as illustrated in Figs. 9 and 10. The first deflector 214 is similar to the first deflector 70 of Fig. 1. The first deflector 214 is positioned to turn the flow of the air-oil mixture through an angle 218 of at least 90 degrees, as illustrated in Fig. 10.

Referring to Fig. 9, the wall 190 and the housing 142 cooperate to define a first aperture 222 that provides fluid communication between the first chamber 194 and the second chamber 198, similar to the first aperture 78 illustrated in Figs. 1-6. The first aperture 222 contains a first portion that is located between the curved portion 210 and the housing wall 174 and a second portion that is located between the curved portion 210 and the bottom surface 170 of the housing. This configuration allows both the air-oil mixture and the settled oil to pass through the aperture 222. The curved portion 210 cooperates with the wall to define a converging nozzle that efficiently accelerates the flow while decreasing flow impact and noise as compared to the construction of Figs. 1-6.

The second chamber 198 is a substantially empty space positioned adjacent the first chamber 194 and is similar to the second chamber 58 discussed with regard to Figs. 1-6. The second chamber 194 is sized smaller than the first chamber 194 and does not include any deflectors, barriers, or other obstructions, as illustrated with reference to Figs. 9 and 11. In other constructions, the second chamber 198 could be sized differently or could include baffles.

The wall 190 and housing 142 cooperate to define a second aperture 226, similar to the first aperture 222, that provides fluid communication between the second chamber 198 and the third chamber 202. The second aperture contains a first portion that is located between the curved portion 210 and the housing wall 174 and a second portion that is located between the curved portion 210 and the bottom surface 170 of the housing to allow both the air-oil mixture and the settled oil to pass through the aperture 226. The curved portion 210 cooperates with the wall to define a converging nozzle that efficiently accelerates the flow while decreasing flow impact and noise as compared to the construction of Figs. 1-6.

The third chamber 202 is similar to the second chamber 198 and is a substantially empty space positioned diagonally from the first chamber 194. The third chamber 202 is sized larger than the second chamber 198 and does not include any deflectors, baffles, or other obstructions, as illustrated in Figs. 9 and 11. In other constructions, the third chamber 202 could be the same size as the second chamber 198 or could include baffles.

The wall 190 and housing 142 cooperate to define a third aperture 230 that provides fluid communication between the third chamber 202 and the fourth chamber 206. The third aperture 230 is located near the center of the housing 142 rather than near the outside of the housing 142. The third aperture 230 extends to the bottom surface 170 of the housing but does not include a curved portion such that the separated oil in the third chamber 202 is in fluid communication with the separated oil in the fourth chamber 206. As illustrated in Figs. 11 and 12, the housing contains a projecting portion 234 that extends from the top surface 166 to the bottom surface 170 to substantially separate the third chamber 202 from the fourth chamber 206.

The fourth chamber 206 is a space positioned adjacent the first chamber 194 and the third chamber 202. The fourth chamber 206 includes the second deflector 238 which is similar to the second deflector 74 discussed with regard to Figs. 1-6 but is rotated 180 degrees with respect to the second deflector 74. As illustrated in Fig. 12, the second deflector 238 is positioned adjacent the outlet aperture 158 to force the flow of fluid through a first angle 242 of at least 45 degrees and a second angle 246 of at least 45 degrees. In preferred constructions, the second deflector 238 is arranged to turn the flow of fluid through a first angle 242 of about 90 degrees and a second angle 246 of about 90 degrees.

The construction illustrated in Figs. 7-12 operates substantially the same as the construction illustrated in Figs. 1-6. The flow of air-oil mixture is discharged from the compressor 14 into the separator tank 138 via the inlet aperture 154 in a substantially vertical direction. The first deflector 214 turns the flow of the air-oil mixture through an angle of about 90 degrees. Some of the oil particles collide with and stick to the first deflector 214 and some of the oil particles strike the top surface 166 or walls 174 of the housing 142. These particles separate from the air-oil mixture and collect in the bottom of the housing 142 due to gravity. Because the apertures 222, 226, and 230 extend to the bottom surface 170, the separated oil is distributed evenly throughout the chambers 194, 198, 202, 206.

Generally, the air-oil mixture flows through the separator tank 138 in a similar manner as discussed with regard to Figs. 1-6. The air-oil mixture accelerates when it passes through the apertures 222, 226, 230 and decelerates upon entry into the chambers 198, 202, 206. The particular arrangement of the first and second deflectors 214, 238, the shape and location of the apertures 222, 226, 230, and other features of the second construction cooperate to aid in the efficiency of the compressor system 130 by decreasing noise, decreasing oil lapping and foaming, and reducing settling time. In addition, the curved walls reduce the pressure drop associated with an inefficient acceleration, and thereby reduce the pressure drop of air moving through the separator.

Thus, the invention provides, among other things, a mechanical separator. Various features and advantages of the invention are set forth in the following claims.

## Claims

1. A separator (16; 138) for separating a mixed flow of fluid into fluid components, the separator comprising:
a housing (18; 148) substantially enclosing an interior space (34; 162) and defining an inlet aperture (26; 154) and an outlet aperture (30; 158);
a wall (50; 190) disposed within the interior space and cooperating with the housing to define a first chamber (54; 194) that receives the flow of fluid from the inlet, a second chamber (58; 198) that receives the flow of fluid from the first chamber, a third chamber (62; 202) that receives the flow of fluid from the second chamber, and a fourth chamber (66; 206) that receives the flow of fluid from the third chamber and directs the flow of fluid to the outlet aperture;
**characterized in that** there is provided:
a first deflector (70; 214) positioned adjacent the inlet aperture and within the first chamber, the first deflector configured to deflect the flow of fluid entering through the inlet aperture at an angle of at least 90 degrees so as to separate the flow of fluid; and
a second deflector (74; 238) positioned adjacent the outlet aperture and within the fourth chamber and arranged to redirect the flow of fluid through a first angle of at least 90 degrees and a second angle of at least 90 degrees so as to effect a change in velocity of the flow and further separation of the flow of fluid, the wall (50; 190) at least partially defining a first aperture (78; 222) positioned to allow flow between the first chamber and the second chamber, a second aperture (82; 226) positioned to allow flow between the second chamber and the third chamber, and a third aperture (86; 230) positioned to allow flow between the third chamber and the fourth chamber, the chambers and apertures arranged to effect changes in velocity of the flow and yet further separation of the flow of fluid.

2. The separator of claim 1, wherein the wall (50; 190) is comprised of a first wall portion and a second wall portion that intersects the first wall portion such that the first chamber (54; 194), the second chamber (58; 198), the third chamber (62; 202), and the fourth chamber (66; 206) are substantially the same size.

3. The separator of claim 1, wherein the first aperture (78; 222), the second aperture (82; 226), and the third aperture (86; 230) are rectangular.

4. The separator of claim 1, wherein the housing (18; 148) includes a top surface (106; 166) and a bottom surface (110; 170), and wherein the wall (50; 190) extends from the top surface to the bottom surface to define a wall height, and wherein the first (78; 222), second (82; 226), and third apertures (86; 230) define an aperture height that is less than the wall height.

5. The separator of claim 4, wherein the wall (50; 190) defines a lowermost surface of each of the first aperture (78; 222), the second aperture (82; 226), and the third aperture (86; 230), and wherein the lowermost surfaces are spaced above the bottom surface.

## Patentansprüche

1. Abscheider (16; 138) für das Trennen eines gemischten Fluidstromes in Fluidkomponenten, wobei der Abscheider aufweist:
ein Gehäuse (18; 148), das im Wesentlichen einen Innenraum (34; 162) einschließt und eine Einlassöffnung (26; 154) und eine Auslassöffnung (30; 158) definiert;
eine Wand (50; 190), die innerhalb des Innenraumes angeordnet ist und mit dem Gehäuse zusammenwirkt, um eine erste Kammer (54; 194), die den Fluidstrom vom Einlass aufnimmt, eine zweite Kammer (58; 198), die den Fluidstrom von der ersten Kammer aufnimmt, eine dritte Kammer (62; 202), die den Fluidstrom von der zweiten Kammer aufnimmt, und eine vierte Kammer (66; 206) zu definieren, die den Fluidstrom von der dritten Kammer aufnimmt und den Fluidstrom zur Auslassöffnung lenkt;
**dadurch gekennzeichnet, dass** bereitgestellt wird:
ein erster Deflektor (70; 214), der benachbart der Einlassöffnung und innerhalb der ersten Kammer positioniert ist, wobei der erste Deflektor ausgebildet ist, um den Fluidstrom, der durch die Einlassöffnung eintritt, unter einem Winkel von mindestens 90 Grad abzulenken, um so den Fluidstrom zu trennen; und
ein zweiter Deflektor (74; 238), der benachbart der Auslassöffnung und innerhalb der vierten Kammer positioniert und angeordnet ist, um den Fluidstrom um einen ersten Winkel von mindestens 90 Grad und einen zweiten Winkel von mindestens 90 Grad umzulenken, um so eine Veränderung der Geschwindigkeit des Stromes und eine weitere Trennung des Fluidstromes zu bewirken, wobei die Wand (50; 190) mindestens teilweise eine erste Öffnung (78; 222), die positioniert ist, um einen Strom zwischen der ersten Kammer und der zweiten Kammer zu gestatten, eine zweite Kammer (82; 226), die positioniert ist, um einen Strom zwischen der zweiten Kammer und der dritten Kammer zu gestatten, und eine dritte Öffnung (86; 230) definiert, die positioniert ist, um einen Strom zwischen der dritten Kammer und der vierten Kammer zu gestatten, wobei die Kammern und die Öffnungen angeordnet sind, um Veränderungen bei der Geschwindigkeit des Stromes und noch eine weitere Trennung des Fluidstromes zu bewirken.

2. Abscheider nach Anspruch 1, bei dem die Wand (50; 190) einen ersten Wandabschnitt und einen zweiten Wandabschnitt aufweist, der den ersten Wandabschnitt so schneidet, dass die erste Kammer (54; 194), die zweite Kammer (58; 198), die dritte Kammer (62; 202) und die vierte Kammer (66; 206) im Wesentlichen die gleiche Größe aufweisen.

3. Abscheider nach Anspruch 1, bei dem die erste Öffnung (78; 222), die zweite Öffnung (82; 226) und die dritte Öffnung (86; 230) rechteckig sind.

4. Abscheider nach Anspruch 1, bei dem das Gehäuse (18; 148) eine obere Fläche (106; 166) und eine untere Fläche (110; 170) umfasst, und wobei sich die Wand (50; 190) von der oberen Fläche zur unteren Fläche erstreckt, um eine Wandhöhe zu definieren, und wobei die erste (78; 222), die zweite (82; 226) und die dritte Öffnung (86; 230) eine Öffnungshöhe definieren, die kleiner ist als die Handhöhe.

5. Abscheider nach Anspruch 4, bei dem die Wand (50; 190) eine unterste Fläche einer jeden der ersten Öffnung (78; 222), der zweiten Öffnung (82; 226) und der dritten Öffnung (86; 230) definiert, und wobei die untersten Flächen oberhalb der unteren Fläche mit Abstand angeordnet sind.

## Revendications

1. Séparateur (16;138) pour séparer un écoulement mixte de fluide en composants de fluide, le séparateur comprenant :
un boîtier (18; 148), renfermant essentiellement un espace interne (34; 162) et définissant une ouverture d'entrée (28 ; 154) et une ouverture de sortie (30; 158) ;
une paroi (50; 190), agencée dans l'espace interne et coopérant avec le boîtier pour définir une première chambre (54; 194) recevant l'écoulement de fluide provenant de l'entrée, une deuxième chambre (58; 198) recevant l'écoulement de fluide provenant de la première chambre, une troisième chambre (62; 202) recevant l'écoulement de fluide provenant de la deuxième chambre, et une quatrième chambre (66; 206) recevant l'écoulement de fluide provenant de la troisième chambre, et dirigeant l'écoulement de fluide vers l'ouverture de sortie ;
**caractérisé en ce qu'**il est fourni :
un premier déflecteur (70; 214) positionné près de l'ouverture d'entrée et dans la première chambre, le premier déflecteur étant configuré de sorte à dévier l'écoulement de fluide entrant à travers l'ouverture d'entrée à un angle d'au moins 90 degrés, de sorte à séparer l'écoulement de fluide ; et
un deuxième déflecteur (74; 238), positionné près de l'ouverture de sortie et dans la quatrième chambre, et configuré de sorte à rediriger l'écoulement de fluide à travers un premier angle d'au moins 90 degrés et un deuxième angle d'au moins 90 degrés, de sorte à entraîner un changement de la vitesse de l'écoulement et une séparation additionnelle de l'écoulement de fluide, la paroi (50; 190) définissant au moins en partie une première ouverture (78; 222), positionnée de sorte à permettre l'écoulement entre la première chambre et la deuxième chambre, une deuxième ouverture (82; 226), positionnée de sorte à permettre l'écoulement entre la deuxième chambre et la troisième chambre, et une troisième ouverture (86; 230), positionnée de sorte à permettre l'écoulement entre la troisième chambre et la quatrième chambre, les chambres et les ouvertures étant agencées de sorte à entraîner des changements de la vitesse de l'écoulement et une séparation additionnelle de l'écoulement de fluide.

2. Séparateur selon la revendication 1, dans lequel la paroi (50; 190) comprend une première partie de paroi et une deuxième partie de paroi, coupant la première partie de paroi, de sorte que la première chambre (54; 194), la deuxième chambre (58; 198), la troisième chambre (62; 202) et la quatrième chambre (66; 206) ont pratiquement la même taille.

3. Séparateur selon la revendication 1, dans lequel la première ouverture (78; 222), la deuxième ouverture (82; 226) et la troisième ouverture (86; 230) sont rectangulaires.

4. Séparateur selon la revendication 1, dans lequel le boîtier (18; 148) comprend unc surface supérieure (106; 166) et une surface inférieure (110; 170), la paroi (50; 190) s'étendant de la surface supérieure vers la surface inférieure pour définir une hauteur de paroi, les première (78; 222), deuxième (82; 226) et troisième (85; 230) ouvertures définissant une hauteur d'ouverture inférieure à la hauteur de paroi.

5. Séparateur selon la revendication 4, dans lequel la paroi (50; 190) définit une surface la plus inférieure de chacune des première (78; 222), deuxième (82; 226) et troisième (86; 230) ouvertures, les surfaces les plus inférieures étant espacées au-dessus de la surface inférieure.
